(19) Europäisches Patentamt
European Patent Office
Office européen des brevets

(11) Veröffentlichungsnummer: **0 461 425 A2**

(12) **EUROPÄISCHE PATENTANMELDUNG**

(21) Anmeldenummer: **91108183.4**

(22) Anmeldetag: **21.05.91**

(51) Int. Cl.5: **G06F 3/06**, G11B 20/12

(30) Priorität: **13.06.90 DE 4018994**

(43) Veröffentlichungstag der Anmeldung:
**18.12.91 Patentblatt 91/51**

(84) Benannte Vertragsstaaten:
**AT BE CH DE DK ES FR GB GR IT LI LU NL SE**

(71) Anmelder: **GIGATAPE SYSTEME FUER DATENSICHERUNG GMBH**
**Benzstrasse 28**
**W-8039 Puchheim(DE)**

(72) Erfinder: **Brauner, Ingolf**
**Schützenstrasse 15**
**W-8912 Kaufering(DE)**

(74) Vertreter: **Weber, Otto Ernst, Dipl.-Phys. et al**
**Weber & Heim Hofbrunnstrasse 36**
**W-8000 München 71(DE)**

# (54) Verfahren zur Datenformateinstellung einer Datenverarbeitungsanlage.

(57) Es wird ein Verfahren zur Datenformateinstellung einer Datenverarbeitungsanlage beschrieben, mit welchem unter Verwendung von gerätespezifischen Datenträgern, beispielsweise Magnetbandkassetten, die Geräteelektronik an unterschiedliche Datenformate angepaßt werden kann. Die Information über die das Format bestimmende Speicherbelegung ist auf einen separaten Datenträger aufgezeichnet, der anstelle des Benutzerdatenträgers in die betreffende Schreib-/Leseeinrichtung eingesetzt wird. Dieser Formatbestimmungs-Datenträger wird von den Anwenderdatenträgern dadurch automatisch unterschieden, daß das zugehörige Datenformat vom vorgegebenen Datenformat abweicht. Am Erkennen dieses Unterscheidungskriteriums werden diejenigen Informationen, die das neue Format betreffen,in einen elektronisch wiederbeschreibbaren Festwertspeicher eingelesen und abgespeichert. Die Formatierung/Deformatierung eines Anwenderdatenstroms beim Lesen oder Beschreiben eines Anwenderdatenträgers erfolgt dann mit dem neuen Format.

EP 0 461 425 A2

Die Erfindung betrifft ein Verfahren zur Datenformateinstellung einer Datenverarbeitungsanlage (DV-Anlage), bei welcher jeweils ein austauschbarer Datenträger vorgegebener Art (Anwenderdatenträger), beispielsweise eine Magnetband-Kassette, mit Daten eines vorgegebenen Formats, beispielsweise DDS-Format, über eine Schreib-/Leseeinrichtung eingelesen und/ oder beschrieben wird, und bei welcher die Datenformatierung in einer Formatieranordnung festgelegt ist, die auf einen die spezifischen Parameter enthaltenden Parameterspeicher zugreift.

Bekanntlich werden in der Datenverarbeitung Datenströme nach vorgegebenen Datenformaten gegliedert und organisiert. Bekannt sind beispielsweise das DDS-Datenformat, das Data/DAT und das GIGAformat. Außerdem sind weitere anwenderspezifische Formate im Einsatz. Da die einzelnen Datenformate für unterschiedliche Anwendungen und zur Verwendung in verschiedensten Datenverarbeitungsanlagen konzipiert sind, sind sie in der Regel inkompatibel. Aus diesem Grund ist es nicht möglich, austauschbare Datenträger, die Daten mit einem bestimmten Datenformat enthalten, in einer Datenverarbeitungsanlage zu lesen oder zu beschreiben, welche den Datenstrom nach einem anderen Verfahren formatiert oder deformatiert.

Die Formatierung/Deformatierung eines Anwenderdatenstroms beim Austausch mit einem Datenträger erfolgt überlicherweise mit einer Schaltelektronik oder einem Rechenwerk, die auf einen die spezifischen Format-Parameter enthaltenen Speicher zurückgreifen.

Der Erfindung liegt die **Aufgabe** zugrunde, ein Verfahren der eingangs genannten Art anzugeben, mit welchem das Format einer vorgegeben DV-Anlage auf einfache Weise geändert werden kann.

Diese Aufgabe wird dadurch gelöst, daß an der Schreib-/Leseeinrichtung anstelle eines Benutzerdatenträgers ein weiterer artgleicher Datenträger (Formatbestimmungs-Datenträger) zum Lesen bereitgestellt wird, der alle notwendigen Informationen bezüglich eines neuen Formats enthält, daß als Unterscheidungsmerkmal zum Benutzer-Datenträger und als Erkennungsmerkmal des Formatbestimmungs-Datenträgers die Abweichung vom vorgegebenen Format gilt, daß beim Erkennen dieses Unterscheidungsmerkmals diejenigen Informationen, die das neue Format betreffen, eingelesen und im Parameterspeicher abgespeichert werden, und daß die Parameter des vorgegebenen Formats unwirksam gemacht werden.

Die Erfindung macht sich den Grundgedanken zunutze, daß die Formatänderung mit Hilfe eines gerätespezifischen Datenträgers vorgenommen werden kann, so daß für den Betreiber keine zusätzlichen Geräte oder Einheiten erforderlich sind. Dem Betreiber oder Benutzer der Datenverarbeitungsanlage kann beispielsweise beim Kauf ein Datenträger für das von ihm gewünschte Datenformat bereitgestellt werden, so daß die Formateinstellung an jedem beliebigen Gerät kurzfristig erfolgen kann. Auf diese Weise wird die Lagerhaltung verringert, weil nicht DV-Anlagen oder Geräte desselben Typs mit verschiedenen Formateinstellungen zur Auswahl zur Verfügung stehen müssen. Außerdem ist für die Formatänderung kein sepzielles Wissen erforderlich und sie kann von jeden Gerätebediener vorgenommen werden. Bei einer für Magnetbandkassetten ausgelegten DV - Anlage genügt es also, eine Formatierkassette bereit zu stellen.

Das Verfahren kann auf besonders einfache Weise dadurch durchgeführt werden, daß das Einlesen und Abspeichern der neuen Format-Parameter und das Unwirksammachen der vorgegebenen Format-Parameter selbsttätig erfolgt, wenn ein Abweichen vom vorgegebenen Format erkannt wird. Der Bediener braucht somit lediglich den neuen Formatbestimmungs-Datenträger in die Schreib-/Leseeinrichtung einzulegen.

Zur Überprüfung eines eingelegten Datenträgers können zweckmäßigerweise zusätzlich oder alternativ zu dem vorstehend beschriebenen Unterscheidungsmerkmal noch weitere Unterscheidungsmerkmale bzw. Prüfkriterien herangezogen werden.

Es kann demnach vorteilhaft sein, daß der Datenträger selbst und/oder das Datenträgergehäuse mit einer Kennung versehen sind. Die Kennung besteht bevorzugt aus einer Lochung oder Kerbung, die mechanisch oder optisch abgetastet wird.

In einer anderen Ausgestaltung trägt der Formatbestimmungs-Datenträger oder der Datenträger mit dem vorgegebenen Datenformat eine elektromagnetisch aufgebrachte Kennung, die über die Schreib-/Leseeinheit ausgelesen wird.

Besonders vorteilhaft ist es, daß eine Plausibilitätskontrolle durchgeführt wird, um zu verhindern, daß ein Datenträger unzutreffenderweise als Formatbestimmungs-Datenträger behandelt wird. Dies kann beispielsweise dadurch erfolgen, daß die Formatparameter-Grenzwerte überprüft werden, daß die Formatparameter blockweise mit Prüfsummen versehen werden oder daß die Formatparameter mehrfach, beispielsweise in mehreren Spuren nacheinander, auf dem Datenträger enthalten sind.

Alternativ dazu kann es zweckmäßig sein, daß das Einlesen und Abspeichern der neuen Format-Informationen und das Unwirksammachen der vorgegebenen Format-Informationen nur dann erfolgt, wenn dieser Vorgang durch eine Bedienperson ausgelöst wird.

Das Starten dieses Vorgangs erfolgt bevorzugt dadurch, daß von der Bedienperson ein Schalter betätigt wird. Auf diese Weise ist sichergestellt, daß das Format nicht irrtümlich geändert wird, beispielsweise wenn ein ungeeigneter Datenträger eingelegt wird.

Als Vorsichtsmaßnahme gegen ein undefiniertes Einleiten oder Durchführen eines Formatänderungsvorgangs ist es vorteilhaft, daß zunächst geprüft wird, ob der eingegebene Datenträger leer ist, und daß im Falle eines Leerdatenträgers eine entsprechende Anzeige erfolgt.

Eine weitere bevorzugte Ausgestaltung der Erfindung besteht darin, daß der Inhalt des Formatbestimmungs-Datenträgers vor dem Beschreiben des Parameterspeichers zwischengespeichert wird.

Nachfolgend wird die Erfindung anhand eines in der Zeichnung dargestellten Ausführungsbeispieles weiter beschrieben.

Figur 1 zeigt schematisch anhand eines Blockschaltbilds eine DV-Anlage mit einer Formatieranordnung zur wahlweisen Einstellung unterschiedlicher Datenformate;

Figur 2 zeigt schematisch Beispiele für Parameter von Datenformaten;

Figur 3 zeigt schematisch anhand eines Blockschaltbilds zwei Funktionsabläufe der DV-Anlage gem. Fig. 1 und

Figur 4 zeigt schematisch einen Verfahrensablauf für eine Formatänderung.

Gemäß Fig. 1 umfaßt eine DV-Anlage neben einer Mikroprozessoreinheit 10 (MPU) mit einem elektrisch löschbaren, wieder beschreibbaren Festwertspeicher 11 und einem Urlader 12, eine Computer-Schnittstelle 13 sowie einer Laufwerk-Schnittstelle 14. Über die Computer-Schnittstelle 13 wird ein Anwenderdatenstrom, beispielsweise Prozeßdaten zur oder von der Laufwerk-Schnittstelle 14 übertragen. Die Laufwerk-Schnittstelle 14 ist zum Anschluß an eine Schreib-/Leseeinrichtung einer Magnetbandkassette ausgebildet. Auf diesem Anwenderdatenträger 21 (Fig.3) werden Daten wenigstens abschnittweise linear aufgezeichnet.

Die Formatierung/Deformatierung des Anwenderdatenstroms erfolgt mittels einer Formatieranordnung 15 in Verbindung mit einem frei programmierbaren Fehlerkorrektur-Prozessor (ECC-Prozessor) 16, der mit einem Puffer-Manager 17 sowie einem Puffer 18 zusammenwirkt. Die Format - Parameter sind im Festwertspeicher 11 abgespeichert.

Die Formatiervorrichtung 15 umfaßt gemäß Fig. 2 einen Format-Manager 19, über welchen wahlweise ein vorgegebenes Datenformat festgelegt werden kann, wie anhand der Figuren 3 und 4 näher erläutert ist. Das jeweilige Datenformat ist durch eine Anzahl von Funktionen gekennzeichnet, die in Fig. 2 anhand von neun Funktionsblöcken und drei Hilfsfunktionsblöcken, also insgesamt n = 12 Funktionsblöcke beispielhaft wiedergegeben ist, wobei jeder Funktionsblock mit i = 1,2 ... 12 beziffert ist. Diese Funktionen sind jeweils für sich genommen bekannt.Ein bestimmtes Datenformat kann durch kombinatorische Aktivierung von Funktionsblöcken kreiert werden. Wenn man die Anzahl der Parameter eines i-ten Funktionsblockes mit p(i) bezeichnet und q(i) den q-ten Parameter des i-ten Funktionsblockes kennzeichnet, wobei $1 \leq q \leq p$ ist, ergibt sich als Anzahl der Einstellungsmöglichkeiten für den q-ten Parameter des i-ten Funktionsblockes eine Zahl E(q(i)). Die Anzahl aller Einstellmöglichkeiten der Formatiervorrichtung 15 ergibt sich dann zu

$$M = \sum_{i=1}^{n} \sum_{q=1}^{p(i)} E(q(i))$$

Daraus folgt ferner, daß mit der beispielhaft dargestellten Formatieranordnung 15 insgesamt $F = 2^M$ unterschiedliche Datenformate bestimmt werden.

Analog lassen sich die Möglichkeiten des ECC - Prozessors 16 zu $C = 2^K$ berechnen ( C = Zahl der unterschiedlichen ECC - Formate, K = Anzahl aller Einstellungsmöglichkeiten des ECC - Prozessors ). Die Gesamtzahl G der mit diesem Verfahren einstellbaren Datenformate berechnet sich zu G = F * c.

Gemäß Fig. 3 wird das gewünschte Datenformat in der DV-Anlage mit Hilfe eines als Magnetbandkassette ausgebildeten Formatbestimmungs-Datenträgers 20 festgelegt, der in die LaufwerkSchreib-/Leseeinrichtung 14 (Fig. 1) anstelle eines als gleichartige Magnetbandkassette ausgebildeten Benutzerdatenträgers 21 eingegeben wird. Der Inhalt des Formatbestimmungs-Datenträgers 20 wird in den wiederbeschreibbaren Festwertspeicher 11 geladen.

Die dabei abgespeicherten spezifischen Formatparameter werden bei jeder Inbetriebnahme der DV-Anlage unter Steuerung einer Ablaufkontrolle 22 ausgelesen und es werden die für die Formatierung/Deformatierung vorhandenen Systemkomponenten aktiviert, d.h. die Formatiervorrichtung 19, der ECC-Prozessor 16 sowie der Puffer-Manager 18.

Nachdem die Information aus dem Formatbestimmungs-Datenträger 20 im Festwertspeicher 11 abgespeichert wurde, wird der Formatbestimmungs-Datenträger 20 aus der Schreib-/Leseeinrichtung 14 (Fig. 1) entfernt und es kann ein Anwenderdatenträger 21 eingelegt werden. Daten aus dem Anwenderdatenstrom 23 werden dann mit dem eingestellten Datenformat in den Anwenderdatenträger 21 eingeschrieben oder es können Daten, die das eingestellte Format aufweisen, aus dem Anwenderdatenträger 21 in den Anwenderdatenstrom 23 übertragen werden.

Das Verfahren zur Datenformateinstellung läuft gem. Fig. 4 im einzelnen nach folgenden Kriterien ab.

Zunächst wird vorausgesetzt, daß ein bestimmtes Datenformat vorgegeben ist. Die DV-Anlage befindet sich gemäß Block 40 in einem Zustand, in welchem auf eine Magnetbandkassette gewartet wird, unabhängig davon, ob es sich hierbei um einen Anwenderdatenträger 21 oder einen Formatbestimmungs-Datenträger 20 (Fig. 3) handelt.

Die Kassette wird nach dem Einlegen eingelesen und es wird gemäß Block 41 geprüft, ob die auf der Kassette aufgezeichneten Daten mit dem vorgegebenen Datenformat übereinstimmen. Wird Übereinstimmung festgestellt, so schließt sich ein normaler Programmablauf an, der darin bestehen kann, daß die Kassette gelesen, beschrieben o.ä. wird.

Ergibt die Prüfung gemäß Block 41 jedoch, daß die Daten der Kassette vom vorgegebenen Format abweichen, so wird gemäß Block 43 überprüft, ob es sich um einen fehlerhaften Datenträger handelt. Gegebenenfalls wird eine Fehlermeldung ausgegeben und es muß eine neue Kassette geladen werden.

Bei ordnungsgemäßer Kassette und abweichendem Datenformat ist dies das Kriterium dafür, daß es sich bei der eingelegten Kassette um einen Formatbestimmungs-Datenträger handelt. Demzufolge muß das Datenformat neu festgelegt werden.

Zu diesem Zweck wird gemäß Block 44 die Prüfsumme des elektrisch löschbaren, wiederbeschreibbaren Festwertspeichers 11 (Fig. 1) gelöscht. Außerdem wird gem. Block 45 ein Zugriff auf den Festwertspeicher unterbunden, indem ein bestimmtes Flag zurückgesetzt wird (Reset HW-Flag). In diesem Zustand, der gemäß Abfrage 46 überprüft wird, kann eine Formateinstellung gem. Block 47 noch nicht erfolgen. Es muß zunächst über den Urlader 12 (Fig. 1) eine Festwertspeicher-Ladeprozedur durchgeführt werden, an deren Ende die Sperre aufgehoben wird, d.h. das betreffende HW-Flag wird gesetzt.

Erst dann, wenn alle Daten zwischengespeichert und gesichert sind, wird die neue Formateinstellung gemäß Block 47 vorgenommen und die Formatieranordnungng 15 sowie der ECC-Prozessor 16 (Fig. 1) werden initialisiert.

## Patentansprüche

**1.** Verfahren zur Datenformateinstellung einer Datenverarbeitungsanlage, bei welcher jeweils ein austauschbarer Datenträger vorgegebener Art (Anwenderdatenträger), beispielsweise eine Magnetbandkassette, mit Daten eines vorgegebenen Formats, z.B. DDS-Format, über eine Schreib-/Leseeinrichtung eingelesen und/oder beschrieben wird, und bei welcher die Datenformatierung in einer Formatieranordnung festgelegt ist, die auf einen die spezifischen Parameter enthaltenden Parameterspeicher zugreift,
dadurch **gekennzeichnet,**
daß an der Schreib-/Leseeinrichtung (14) anstelle eines Benutzerdatenträgers (21) ein weiterer artgleicher Datenträger (Formatbestimmungs-Datenträger (20)) zum Lesen bereitgestellt wird, der alle notwendigen Informationen bezüglich eines neuen Datenformats enthält, daß ein Unterscheidungsmerkmal zum Benutzerdatenträger (21) und/oder ein Erkennungsmerkmal des Formatbestimmungs-Datenträgers (20) vorhanden sind, daß beim Erkennen dieses Unterscheidungskriteriums Informationen, die das neue Datenformat betreffen, in den Parameterspeicher eingelesen und abgespeichert werden, und daß die Parameter des vorgegebenen Datenformats unwirksam gemacht werden.

**2.** Verfahren nach Anspruch 1
dadurch **gekennzeichnet,**
daß als Unterscheidungsmerkmal zum Benutzerdatenträger (21) und als Erkennungsmerkmal des Formatbestimmungs-Datenträgers (20) die Abweichung vom vorgegebenen Datenformat gilt.

**3.** Verfahren nach Anspruch 1
dadurch **gekennzeichnet,**
daß als Unterscheidungsmerkmal zum Benutzer-Datenträger (21) und als Erkennungsmerkmal des Formtbestimmungs-Datenträgers (20) eine mechanische oder optische Kennnung des Formatbestimmungs-Datenträgers oder des Anwender-Datenträger (21) oder eines zugehörigen Datenträgergehäuses gilt.

**4.** Verfahren nach Anspruch 1
dadurch **gekennzeichnet,**
daß als Unterscheidungsmerkmal zum Benutzer-Datenträger (21) und als Erkennungsmerkmal des Formatbestimmungs-Datenträgers (20) der Formatbestimmungsdatenträger (20) oder der Anwender-Datenträger (21) eine magnetische Kennung trägt.

**5.** Verfahren nach einem der vorhergehenden Ansprüche,
dadurch **gekennzeichnet,**
daß der Einlesevorgang für den Formatbestimmungs-Datenträger (20) und das Unwirksammachen der vorgegebenen Formatierparameter selbsttätig erfolgt, sobald der Formabestimmungs-Datenträger (20) in die Schreib-/Leseeinrichtung (14) eingegeben wird.

6. Verfahren nach einem der Ansprüche 1 bis 4, dadurch **gekennzeichnet,** daß der Einlesevorgang für den Formatbestimmungs-Datenträger (20) und das Unwirksammachen der vorgegebenen Formatierparameter nur dann erfolgt, wenn dies durch eine Bedienperson ausgelöst wird.

7. Verfahren nach Anspruch 6, dadurch **gekennzeichnet,** daß das Auslösen durch einen handbetätigten Schalter erfolgt.

8. Verfahren nach einem der vorhergehenden Ansprüche, dadurch **gekennzeichnet,** daß geprüft wird, ob der eingegebene Datenträger (20 bzw. 21) leer oder ein Anwenderdatenträger eines anderen Formats ist, und daß gegebenenfalls eine entsprechende Anzeige erfolgt.

9. Verfahren nach einem der vorhergehenden Ansprüche, dadurch **gekennzeichnet,** daß der Inhalt des Formatbestimmungs-Datenträgers (20) vor dem Beschreiben des Parameterspeichers zwischengespeichert wird.

10. Verfahren nach einem der vorhergehenden Ansprüche, dadurch **gekennzeichnet,** daß die bekannten Datenformate in einzelne Funktionsblöcke zerlegt werden, und daß ein gewünschtes neues Datenformat durch eine kombinatorische Aktivierung einzelner oder mehrerer derartiger Funktionsblöcke festgelegt wird.

11. Verfahren nach einem der vorhergehenden Ansprüche, dadurch **gekennzeichnet,** daß bezüglich der eingelesenen Daten eine Plausibilitätskontrolle durchgeführt wird.

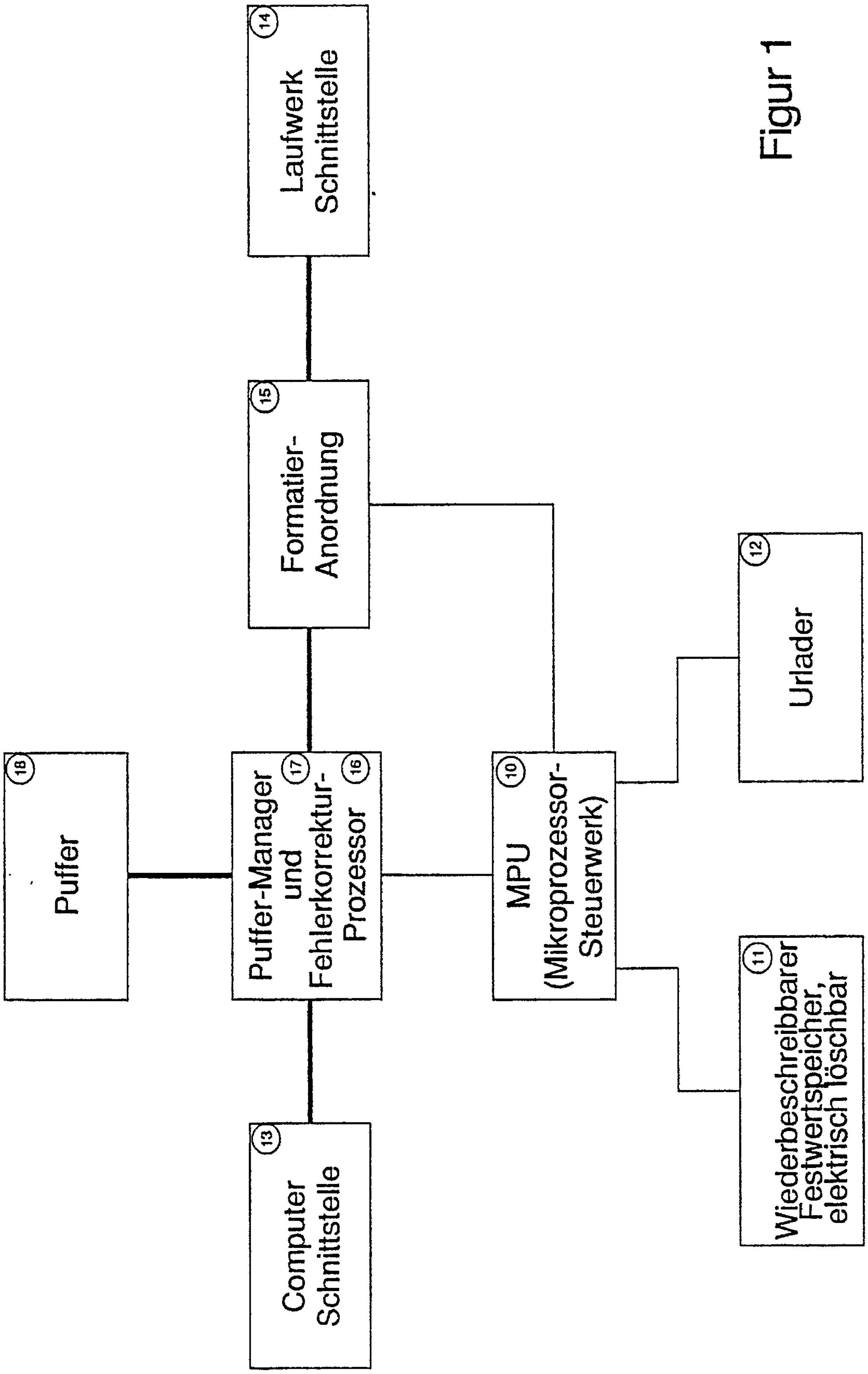
Laufwerk Schnittstelle
14
Formatier-Anordnung
15
Urlader
12
Puffer
18
Puffer-Manager und Fehlerkorrektur-Prozessor
17
16
MPU (Mikroprozessor-Steuerwerk)
10
Wiederbeschreibbarer Festwertspeicher, elektrisch löschbar
11
Computer Schnittstelle
13

Figur 1

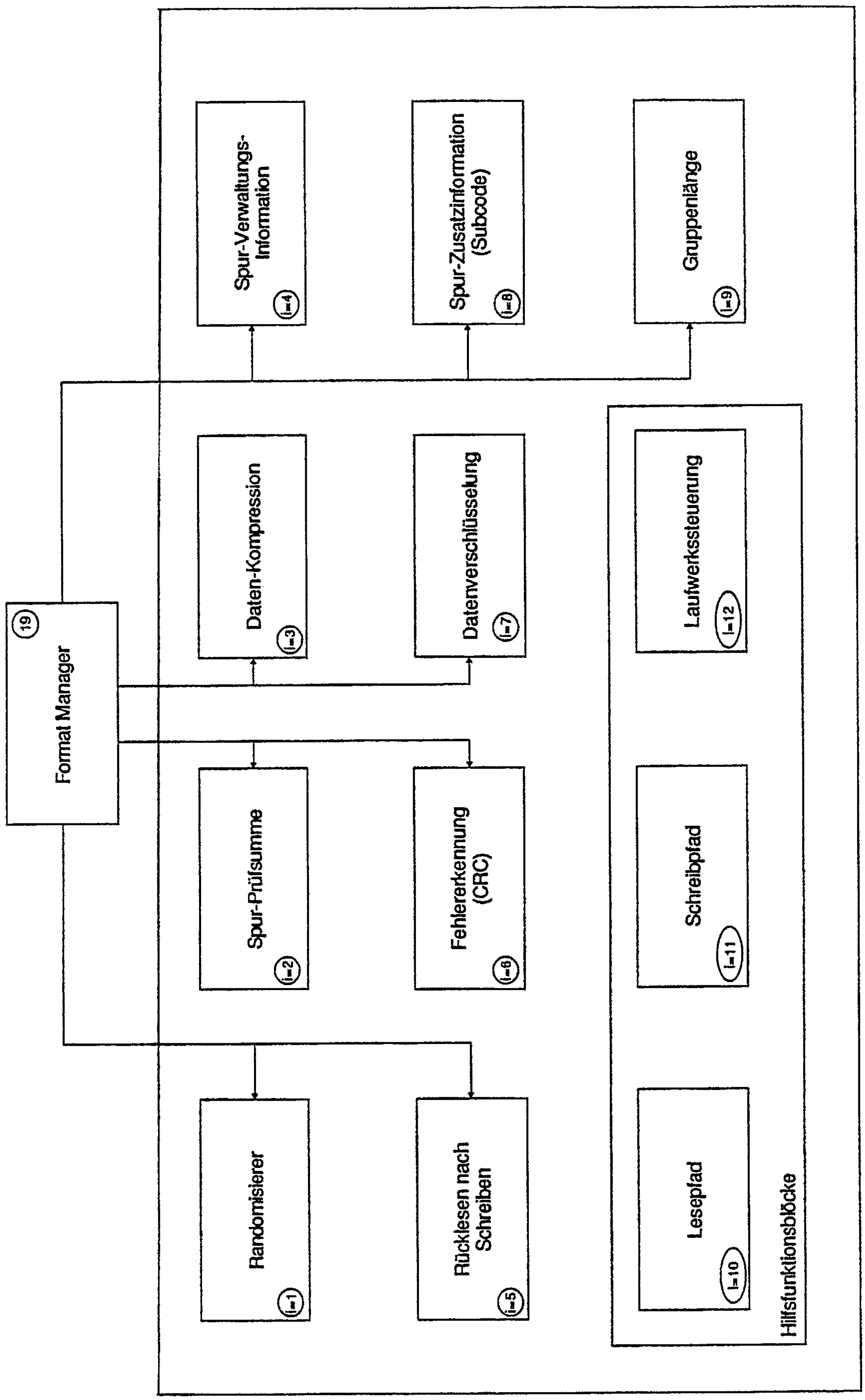
Format Manager
19
Spur-Verwaltungs-Information
i=4
Spur-Zusatzinformation (Subcode)
i=8
Gruppenlänge
i=9
Daten-Kompression
i=3
Datenverschlüsselung
i=7
Laufwerkssteuerung
i=12
Spur-Prüfsumme
i=2
Fehlererkennung (CRC)
i=6
Schreibpfad
i=11
Randomisierer
i=1
Rücklesen nach Schreiben
i=5
Lesepfad
i=10
Hilfsfunktionsblöcke

Figur 2

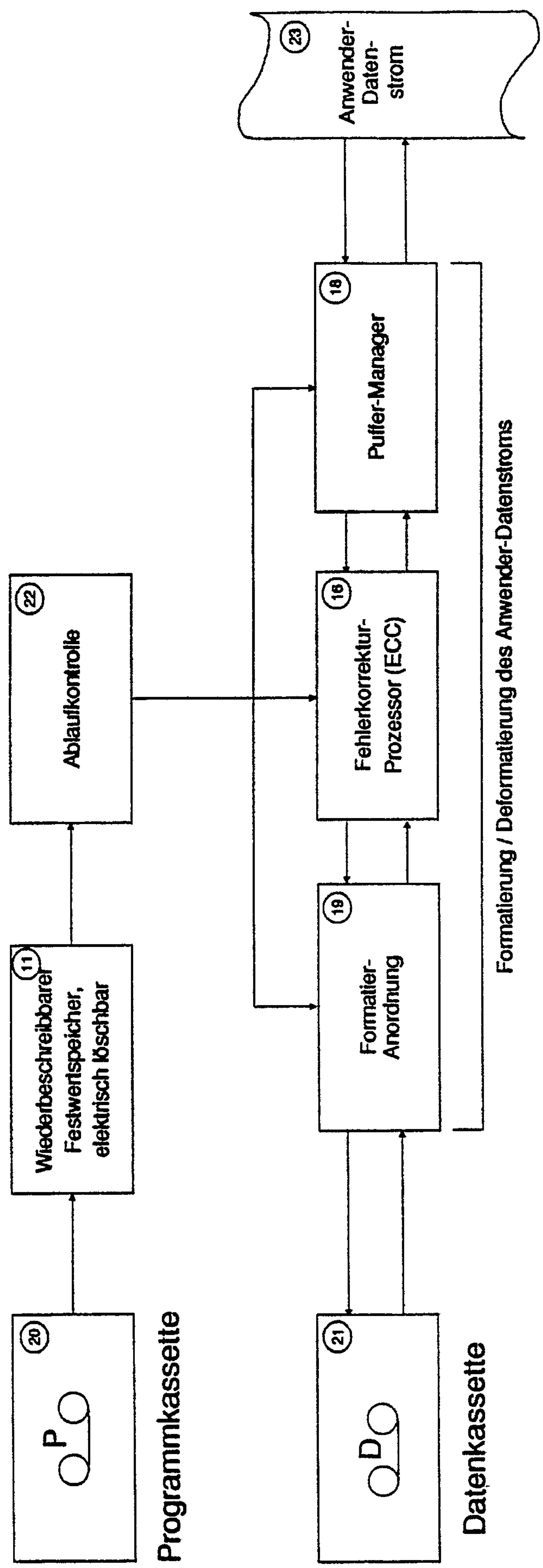
20
P
Programmkassette
11
Wiederbeschreibbarer
Festwertspeicher,
elektrisch löschbar
22
Ablaufkontrolle
21
D
Datenkassette
19
Formatier-
Anordnung
16
Fehlerkorrektur-
Prozessor (ECC)
18
Puffer-Manager
23
Anwender-
Daten-
strom
Formatierung / Deformatierung des Anwender-Datenstroms

Figur 3

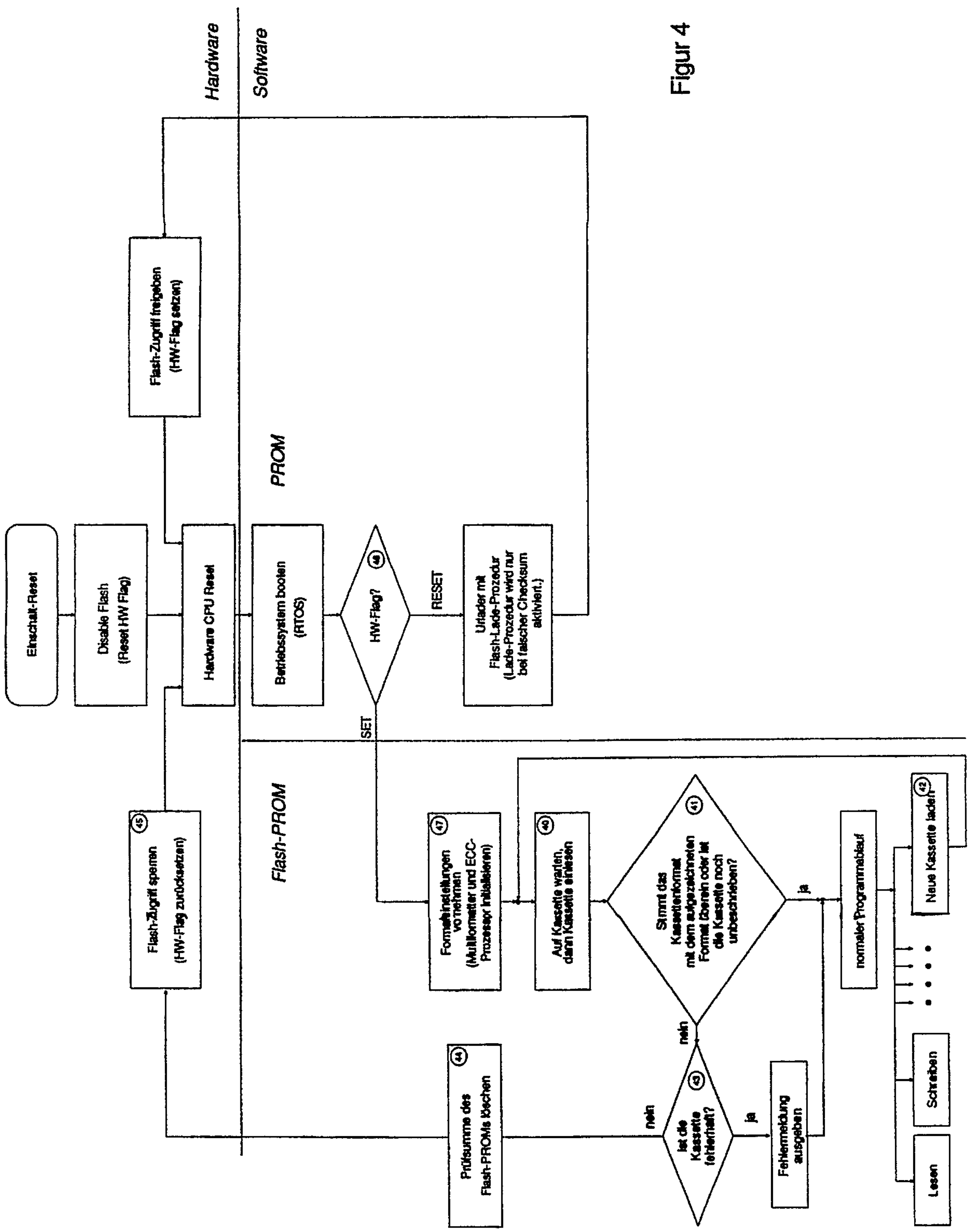
Hardware
Software
Einschalt-Reset
Disable Flash
(Reset HW Flag)
Hardware CPU Reset
Flash-Zugriff freigeben
(HW-Flag setzen)
PROM
Betriebssystem booten
(RTOS)
48
HW-Flag?
RESET
Urlader mit
Flash-Lade-Prozedur
(Lade-Prozedur wird nur
bei falscher Checksum
aktiviert.)
SET
Flash-PROM
45
Flash-Zugriff sperren
(HW-Flag zurücksetzen)
47
Formateinstellungen
vornehmen
(Multiformatter und ECC-
Prozessor initialisieren)
40
Auf Kassette warten,
dann Kassette einlesen
41
Stimmt das
Kassettenformat
mit dem aufgezeichneten
Format überein oder ist
die Kassette noch
unbeschrieben?
ja
nein
normaler Programmablauf
42
Neue Kassette laden
Schreiben
Lesen
43
Ist die
Kassette
fehlerhaft?
ja
nein
Fehlermeldung
ausgeben
44
Prüfsumme des
Flash-PROMs löschen

Figur 4